# EUROPEAN PATENT SPECIFICATION

(11) **EP 2 351 233 B1**
(45) Date of publication and mention of the grant of the patent: **02.08.2017**
(21) Application number: 09783882.5
(22) Date of filing: 09.10.2009
(51) Int. Cl.: H04B 1/00

(54) **SHARED RF FRONT-END MODULE FOR CELLULAR APPLICATION**
GEMEINSAM BENUTZTES HF-FRONTENDMODUL FÜR ZELLULARANWENDUNG
MODULE FRONTAL RF PARTAGÉ POUR APPLICATION CELLULAIRE

(30) Priority: 09.10.2008 EP 08166238
(43) Date of publication of application: 03.08.2011
(73) Proprietor: OCT Circuit Technologies International Limited, Dublin 18 (IE)
(72) Inventor: KALUZNI, Heiko, 01558 Großenhain (DE)
(74) Representative: Grünecker Patent- und Rechtsanwälte PartG mbB
(86) International application number: PCT/EP2009/063156
(87) International publication number: WO 2010/040823

(56) References cited:
- EP-A- 0 921 642
- EP-A- 1 093 223
- EP-A- 1 995 879
- US-A1- 2004 052 272

## Description

### Field of the invention

The present invention relates to a RF front-end stage for user equipment that is designed for use in multiple communication bands and employs Frequency Division Duplex (FDD). The invention also relates to a FDD front-end module included in such a RF front-end stage. The invention further relates to a method for transmitting signals between an user equipment and a base station by means of FDD.

### Background of the invention

Recently, frequency-division duplexing (FDD) has been increasingly used in communication applications such as ADSL and VDSL, IEEE 802.16 WiMax and most cellular systems, including the UMTS/WCDMA Frequency Division Duplexing mode. In FDD the transmitter and receiver operate at different carrier frequencies thereby allowing to send and to receive at the same time. In the case of symmetric traffic this may be benificial when compared to time-division duplexing (TDD) which tends to waste bandwidth during switch-over from transmitting to receiving, has greater inherent latency, and may require more complex circuitry. Another advantage of frequency-division duplexing is that it makes radio planning easier and more efficient since base stations do not interfere with each other, as they transmit and receive in different sub-bands. As such, FDD is used in applications that require a symmetric bandwidth in the uplink and downlink direction such as GSM, UMTS und 802.16, and may also find application in Long Reach Ethernet (LRE) und WiMAX. With the frequency channels being of the same width, this technology is especially useful in voice applications.

In communications using FDD for transmissions between a user device and a base station a "frequency band" in the sense of a duplex frequency band does not mean a continuous range of frequencies but rather designates a pair of non-adjacent frequency sub-bands, one for each transmission direction, that are separated by a guard zone, such that more properly it will be referred to as an operating band below.

A "mobile device" and an "user equipment" for the purpose of the present invention is defined as any device, used by an end user to connect to a base station for communication. This may be a cellular telephone, a personal digital assistant (PDA), a card in a laptop computer and the like.

Nowadays, dual, tri, and quad band mobile devices are known and widely used in GSM systems, such devices supporting communication at two, three, and four different communication standards with different frequency bands, respectively, such as, e.g., GSM-900 and GSM-1800, which are used in Europe and other parts of the world.

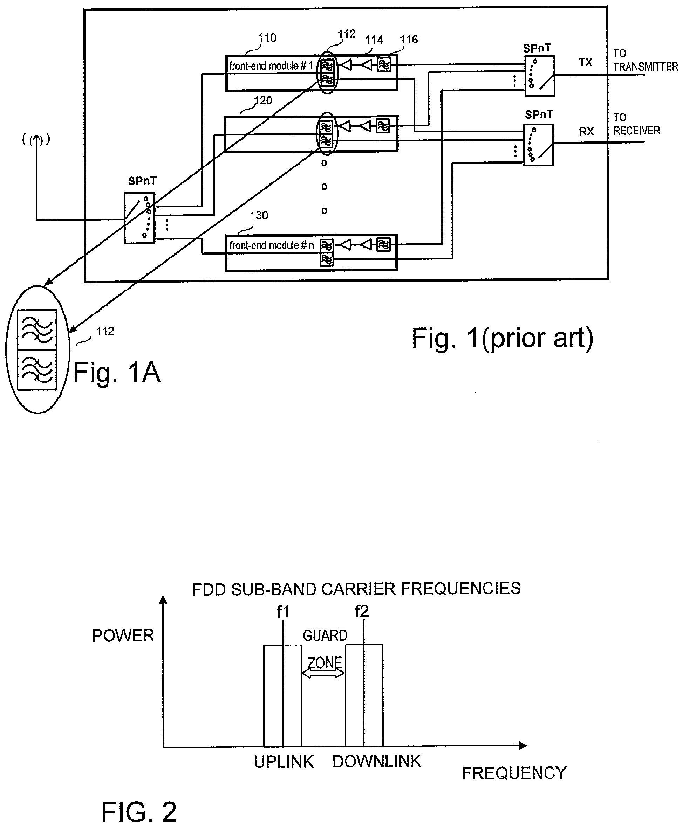

To support a specific number n of operating bands in a mobile device using FDD as communication technology, the RF front-end stage of the mobile device that connects the RF receiver/transmitter circuit to the device's antenna conventionally comprises an equal number n of separate front-end modules, one for each operating band, as is illustrated in Fig. 1. The n front-end modules (110, 120, ..., 130) are connected in parallel between the antenna of the mobile device on one side, and both a RF transmitter circuit and a RF receiver circuit on the other side. The parallel connections on both sides are respectively provided by a SPnT (single pole n through) switch each, n again being the number of separate front-end modules comprised in the front-end stage and hence the number of operating bands the user equipment supports. To give an example, a quad band cell phone conventionally comprises four front-end modules, one for each operating band, and would require SP4T switches to connect the four front-end modules between the antenna at one side and both a RF transmitter circuit and a RF receiver circuit at the other side. The SPnT switches may be operated to automatically select an operating band for communication in response to the local availability of base stations within the reach of the mobile device.

A known front-end module for a dedicated operating band substantially comprises an FDD-duplexer 112 connected between the SPnT switch on the antenna's side and both the transmit and the receive paths, and a power amplifier section 114 and a noise filter 116 in the transmit path, the power amplifier section being the most expensive circuit element both in terms of occupation of real estate on a PCB and in production costs. The duplexer allows the mobile device to send and to receive at the same time by operating the radio receiver and the radio transmitter at slightly different frequencies, i.e. the uplink (transmit) and downlink (receive) sub-bands are separated by a frequency offset. Thus, FDD implies a degree of complexity in that particular filters have to be used in the upstream und downstream direction. Conventionally, such as in all known GSM systems, the lower sub-band is allocated as an uplink sub-band, i.e. for transmitting to a base station, and the upper sub-band is allocated as a downlink sub-band, i.e. for receiving from a base station, as is shown in Fig. 2. It is known practice to implement an FDD duplexer by a pass-band/pass-band filter combination, each pass-band for a respective sub-band, the uplink and downlink sub-bands, respectively, as may be seen from the expanded partial view in Fig. 1a.

A disadvantage of the prior RF front-end stages that are constructed as described above is that for each additional operating band that is to be supported by a user device an additional front-end module has to be integrated into the RF front-end stage adding both complexity and costs.

US 2004/052272 A1 relates to a cellular handset supporting simultaneous service for different frequency ranges. It comprises an antenna switch which provides a similar function as SPnT of Fig.1. One branch of the handset's circuit comprises a duplexer made up of a pass-band/passband filter combination and as such corresponds to a prior art duplexer 112 as illustrated in Fig. 1. The handset's circuit further comprises a passband/notch filter combination. This filter combination is a simple combination filter operative to "pass all relevant frequencies for the handset, with the exception of the UMTS Rx" ([0022]. It serves to insulate the UMTS receiver from any load changes due to switching between Rx and Tx, ... and to attenuate any noise generated by the headset.

EP 0 921 642 A relates to a switching module for use in a communication system which uses a plurality of transceiver modules having different passbands. The switching module comprises a band separating comprised of a filter combination. This band separating circuit serves to switch between the different passbands of the different transceiver modules. That is the filter combination provides the function of SPnT switch in Fig. 1 of the application.

### Object and Summary of the invention

The object of the invention is to provide an RF front-end stage for user equipment that supports a plurality of operating bands and may be produced at lower costs and with a reduced number of circuit devices requiring smaller area on a circuit board.

According to a first aspect, the invention provides an FDD front-end module for a RF front-end stage of a FDD user equipment that supports at least two operating bands each comprising an uplink frequency sub-band and a downlink frequency sub-band wherein at least one of the uplink frequency sub-bands and the downlink frequency sub-bands of said at least two operating bands are not adjacent to each other. The FDD front-end module includes a duplexer which comprises a filter combination of a pass-band filter and a notch filter.

The pass-band filter may be designed to pass the at least two uplink frequency sub-bands and the at least two downlink frequency sub-bands, and the notch filter may be designed to pass the at least two uplink frequency sub-bands and to stop the at least two downlink frequency sub-bands.

The invention advantageously uses one single front-end module, instead of at least two as in the prior art, for communicating in at least two operating bands. In this way, at least one power amplifier section is eliminated and smaller board area is required such that an FDD RF front-end stage for multiple operating bands for a mobile device may be produced at lower costs.

According to another aspect, the invention provides a multi operating band RF front-end stage for user equipment employing frequency division duplex (FDD) for communicating both uplink and downlink frequency sub-bands of a plurality of operating bands, and connected between an antenna of the user equipment and an RF transmitter/receiver circuit. The RF front-end stage of the invention comprises a plurality of conventional front-end modules, each one including a frequency duplexer with a pass-band/pass-band filter characteristic for simultaneously communicating uplink and downlink frequency sub-bands of a single designated operating band. The RF front-end stage of the invention further includes at least one front-end module as described above which according to the invention comprises a frequency duplexer that is adapted to communicate a plurality of operating bands each comprising an uplink frequency sub-band and a downlink frequency sub-band wherein at least one of the uplink frequency sub-bands of said plurality of operating bands is not adjacent to the other uplink frequency sub-bands of said plurality of operating bands or at least one of the downlink frequency sub-bands of said plurality of operating bands is not adjacent to the other downlink frequency sub-bands of said plurality of operating bands.

A further advantage of the invention is that a multi operating band RF front-end stage for user equipment that comprises a front-end module according to the invention may be implemented with switches having a smaller number of ports, i.e. reduced by at least one in comparison to the prior art, such switches being available more easily and at lower costs. Additionally, a shared FDD front-end module according to the invention allows the RF control interface to be simplified.

In yet another aspect, the invention provides a method for simultaneously communicating uplink and downlink frequency sub-bands of a plurality of dedicated operating bands, wherein at least one of the uplink frequency sub-bands of said plurality of operating bands is not adjacent to the other uplink frequency sub-bands of said plurality of operating bands or at least one of the downlink frequency sub-bands of said plurality of operating bands is not adjacent to the other downlink frequency sub-bands of said plurality of operating bands. The method is characterized by communicating uplink frequency sub-bands and downlink frequency sub-bands of a plurality of operating bands over a single front-end module which includes a frequency duplexer that comprises a combination of a pass-band filter and a notch filter.

Additional features and advantages of the present invention will be apparent from the following detailed description of specific embodiments which is given by way of example only and in which reference will be made to the accompanying drawings, wherein:
- Fig. 1: shows an RF front-end stage according to prior art;
- Fig. 1A: is an enlarged view of the duplexer of Fig. 1;
- Fig. 2: is a schematic frequency diagram of a typical FDD operating band;
- Fig. 3: shows an RF front-end stage according to the invention;
- Fig. 3A: is an enlarged view of the duplexer of Fig. 3;
- Fig. 4A: shows a frequency band plan with three FDD operating bands which can be supported by a prior RF front-end stage comprising three front-end modules;
- Fig. 4B: shows another frequency band plan with three FDD operating bands which can be supported by a prior RF front-end stage comprising two front-end modules; and
- Fig. 4C: shows yet another frequency band plan comprising three FDD operating bands which can be supported by a RF front-end stage of the invention comprising a single front-end module according to the invention.

### Detailed description of the invention

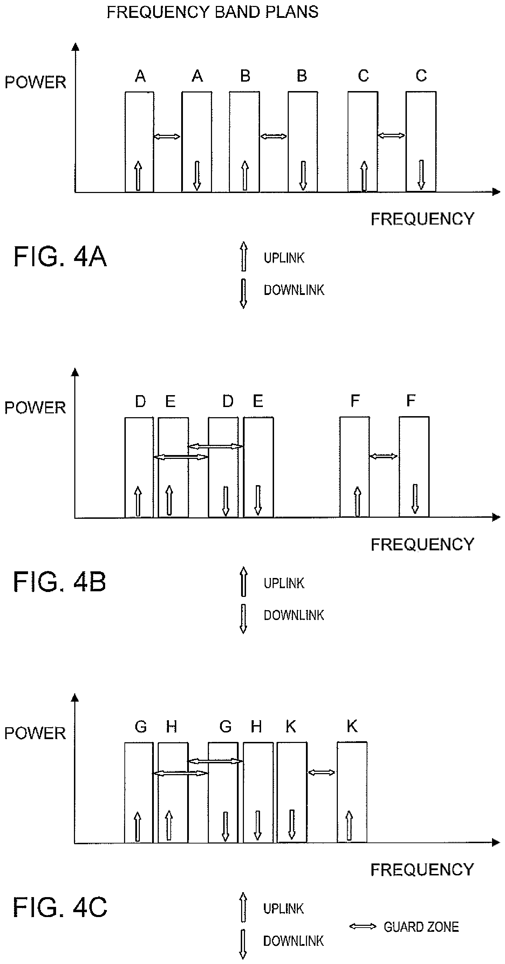

Fig. 4A shows a frequency deployment plan with three FDD operating bands A, B and C, respectively. As stated before, an FDD operating band for the purpose of the invention is defined as a pair of frequency bands, an uplink frequency sub-band and a downlink frequency sub-band which are separated by a frequency offset. Each FDD operating band of Fig. 4A is arranged as described with reference to Fig. 2, i.e. each FDD operating band A, B and C comprises an uplink frequency sub-band for communication from a mobile device to a base station, and a downlink frequency sub-band for communication from a base station to a mobile device. Uplink and downlink frequencies for each band are separated by a guard zone. In each of the operating bands A, B and C the uplink carrier frequency is lower than the downlink carrier frequency, and operating bands A, B and C are well separated from each other, in other words, they are not interleaved with each other. Examples for such a frequency band deployment are, e.g. the GSM-450, GSM-900, and GSM-1800 operation bands. A mobile device that is to support these three operating bands will require a separate front-end module for each FDD operating band A, B and C, wherein each of these front-end modules conventionally comprise a duplexer made up of two pass-band filters, one for passing the uplink and the other one for passing the downlink.

Another frequency deployment plan with three operating bands that are to be supported by a mobile device, is illustrated in Fig 4B. In this scheme two of the operating bands are interleaved such that the uplinks of operating bands D and E are adjacent to each other and the downlinks of operating bands D and E are adjacent to each other. This allows to simplify the front-end stage in that a single front-end module can be used to support both operating bands D and E. This front-end module will conventionally comprise a duplexer made up of a pair of pass-band filters, a first band-pass filter for passing the uplink frequency sub-bands of both operating bands D and E, and a second pass-band filter for passing the downlink frequency sub-bands of both operating bands D and E. A second front-end module will be required to support operating band F, which front-end module will again comprise a duplexer made up of a pair of pass-band filters, one for passing the uplink frequency sub-band of operating band F and one for passing the downlink frequency sub-band of operating band F.

In each case described so far the uplink frequency sub-band is allocated to a lower frequency than the downlink frequency sub-band. However, the above allocation is not imperative. That means, deployments are conceivable where the uplink communication direction is allocated to a frequency sub-band at a higher carrier frequency than the frequency sub-band allocated for the downlink communication direction. Also, frequency deployments with a combination of the above discussed cases are conceivable, i.e. some of the operating bands that are to be supported by a front-end stage of a mobile device have its uplink communication direction allocated to a frequency sub-band at a higher carrier frequency than that of the frequency sub-band allocated for downlink communication, and some other operating bands that are to be supported by the same front-end stage have its uplink communication direction allocated to a frequency sub-band at a lower carrier frequency than that of the frequency sub-band allocated for the downlink communication direction.

A non-limiting example for such a deployment is illustrated in Fig. 4C. The diagram shows three operating bands G, H, and K. Operating bands G and H are interleaved and operating band K is not interleaved with G and H but adjoins operating band H. In particular, as may be seen from the figure, the uplink and downlink frequency sub-bands of operating bands G, H, and K are arranged such that the downlink frequency sub-bands of all three FDD operating bands are adjacent to each other but only two out of the three uplink frequency sub-bands are adjacent to each other, i.e. the uplink frequency sub-bands of FDD operating bands G and H are adjacent to each other and the uplink frequency sub-band of FDD operating band K is not adjacent to the other uplink frequency sub-bands of the three FDD operating bands that are to be supported by a front-end stage. There are two conventional ways to implement a front-end stage which is to support all three FDD operating bands G, H, and K of Fig. 4C. A first way would be similar to the implementation described with reference to Fig. 4A, i.e. to use a separate front-end module for each FDD operating band G, H, and K, wherein each of these front-end modules would comprise a duplexer made up of two pass-band filters, one for passing the uplink and the other one for passing the downlink which would be a rather expensive way to support FDD operating bands G, H, and K.

A second and less expensive way would be to use an implementation as described with reference to Fig. 4B, i.e. to use a first front-end module for FDD operating bands G, and H, and another front-end module for FDD operating band K, wherein the first front-end module would comprise a duplexer made up of two pass-band filters, one for passing the uplink sub-bands of both FDD operating bands G, and H which are adjacent to each other, and the other one for passing the downlink sub-bands of both FDD operating bands G, and H which are adjacent to each other. The second front-end module, likewise, would comprise a duplexer made up of two pass-band filters, one for passing the uplink sub-band of FDD operating band K, and one for passing the downlink sub-band of FDD operating band K. This would eliminate one front-end module and hence would reduce implementation cost in comparison to the front-end stage with three separate front-end modules.

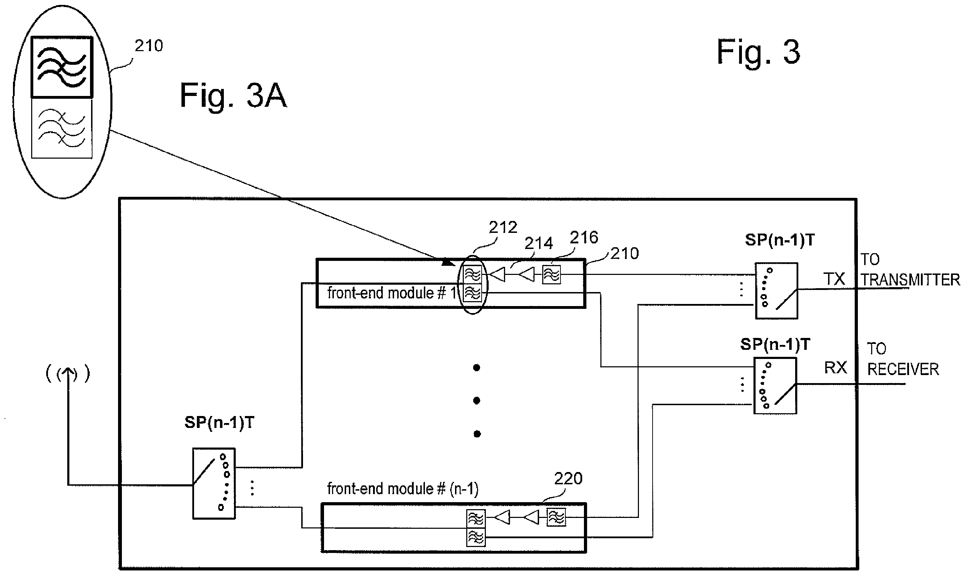

The invention, however, provides for an even more advantageous way to implement a front-end stage which supports communication in the three FDD operating bands of Fig. 4C. A front-end stage according to the invention to support FDD operating bands G, H, and K such as illustrated in Fig. 4C will comprise a single front-end module such as illustrated in Fig. 3 at 210.

Front-end module 210 is connected between the antenna of the user equipment at one side, and both a RF transmitter circuit and a RF receiver circuit at the other side. Front-end module 210 comprises an FDD-duplexer 212 connected between the antenna on the left hand side as shown in Fig. 3 and both the transmit and the receive paths on the right hand side of Fig. 3. The transmit path of front-end module 210 further comprises a power amplifier section 214 and a noise filter 216. Frequency duplexer 212 according to the invention is adapted to communicate all three operating bands G, H, and K of Fig. 4C. All three downlink frequency sub-bands of each of operating bands G, H, and K are adjacent to each other but the uplink frequency sub-band of operating band K is not adjacent to the uplink frequency sub-bands of operating bands G and H.

Frequency duplexer 212 of front-end module 210 of the invention comprises a combination of a pass-band filter and a notch filter which is detailed in the expanded oval of Fig. 3A. The pass-band filter of frequency duplexer 212 is connected between the antenna and the receive path of front-end module 210 and is designed to pass the uplink frequency sub-bands of all three operating bands G, H, and K and the downlink frequency sub-bands of all three operating bands G, H, and K. The notch or stop band filter of frequency duplexer 212 is connected between the antenna and the transmit path of front-end module 210 and is designed to pass the uplink frequency sub-bands of all three operating bands G, H, and K and to stop the downlink frequency sub-bands of all three operating bands G, H, and K. In this manner, duplexer 212 allows the mobile device to send and to receive at the same time.

A person skilled in the art will readily understand that there are many combinations of frequency allocations of several FDD operating bands where the principles of the invention can be applied benificially. For instance a frequency allocation similar to that of Fig. 4C is conceivable, but with the uplink and downlink directions swapped, i.e. with all three uplink frequency sub-bands adjacent to each other and one of the downlink frequency sub-bands not adjacent to the other two downlink frequency sub-bands. In this case the pass-band filter of frequency duplexer 212 will be connected between the antenna and the transmit path of front-end module 210 and the notch or stop band filter will be connected between the antenna and the receive path of front-end module 210.

A non-limiting example for a frequency band deployment for which the front-end module of the invention could be employed with benefit are the three operating bands in the 700MHz spectrum which were auctioned in the U.S. and Canada in early 2008 for UMTS-FDD. A first of these operating bands has its uplink allocated to a lower frequency band (698-716 Mhz) than its downlink (728-746 Mhz). The second and third of these operating bands, however, have its uplinks allocated to a higher frequency band than its downlinks and are interleaved, i.e. have its uplinks adjacent to each other (777-787 Mhz and 788-798MHz, respectively) and its downlinks adjacent to each other (746-756 Mhz and 758-768MHz, respectively). It has to be noted that this is only to give an example for where the invention can be used and is not intended to limit the invention to any frequency deployment plan described herein. There are a variety of other frequency allocation plans conceivable for which the invention may be used as well.

Besides front-end module 210, the front-end stage of the invention may further comprise at least one conventional front-end module such as front-end module 220 shown in Fig.3 which is arranged as described for front-end modules 110 - 130 of Fig. 1, i.e. it includes a frequency duplexer with a filter combination of two pass-band filters for simultaneously communicating uplink and downlink frequency sub-bands of a single designated operating band. While the conventional front-end stage of Fig. 1 requires SPnT switches (n being the number of operating bands supported) to connect the n conventional front-end modules between the antenna and both the receiver and the transmitter circuit, the front-end stage according to the invention at most requires SP(n-1) T switches that connect the (n-1) or even less front-end modules, depending on the number of operating bands the front-end module 210 according to the invention supports, between the antenna at one side and the receiver/transmitter circuits at the other side. To give an example, a front-end stage of a mobile device designed to support six operating bands and comprising one front-end module 210 according to the invention which supports three operating bands, and three conventional front-end modules 220, will only require SP4T (Single Pole 4 Through) switches which are obviously less complex and available at lower costs.

There have thus been described some embodiments of a front-end module for FDD user equipment and front-end stages comprising such front-end modules which is, however, solely intended to illustrate the principles of the invention. Various modifications will readily occur to those skilled in the art without departed from the scope and the spirit of the invention as set forth in the appended claims.

## Claims

1. A front-end module (210) for frequency division duplex (FDD) user equipment, which module connects an antenna of the user equipment with an RF transmitter/receiver circuit of the user equipment and comprises a frequency duplexer connected between said antenna and both a receive path and a transmit path to and from said RF transmitter/receiver circuit, and a power amplifier section and a noise filter in the transmit path;
**characterized in that**
said frequency duplexer comprises a combination of a pass-band filter and a notch filter and is adapted to communicate a plurality of operating bands each comprising an uplink frequency sub-band and a downlink frequency sub-band wherein
a) at least one of the uplink frequency sub-bands of said plurality of operating bands is not adjacent to the other uplink frequency sub-bands of said plurality of operating bands in which case said pass band filter is connected between the antenna and the receive path and said notch filter is connected between the antenna and the transmit path; or
b) at least one of the downlink frequency sub-bands of said plurality of operating bands is not adjacent to the other downlink frequency sub-bands of said plurality of operating bands, in which case said pass band filter is connected between the antenna and the transmit path and said notch filter is connected between the antenna and the receive path.

2. The front-end module of claim 1, wherein said plurality of downlink frequency sub-bands are adjacent to each other and at least one of the uplink frequency sub-bands is not adjacent to the other uplink frequency sub-bands, and wherein said pass-band filter is designed to pass said plurality of uplink frequency sub-bands and said plurality of downlink frequency sub-bands, and said notch filter is designed to pass said plurality of uplink frequency sub-bands and to stop said plurality of downlink frequency sub-bands.

3. The front-end module of claim 1, wherein said plurality of uplink frequency sub-bands are adjacent to each other and at least one of the downlink frequency sub-bands is not adjacent to the other downlink frequency sub-bands, and wherein said pass-band filter is designed to pass said plurality of uplink frequency sub-bands and said plurality of downlink frequency sub-bands, and said notch filter is designed to pass said plurality of downlink frequency sub-bands and to stop said plurality of uplink frequency sub-bands.

4. A multi operating band RF front-end stage for user equipment employing frequency division duplex (FDD) for communicating both uplink and downlink frequency sub-bands of a plurality of operating bands, and connected between an antenna of the user equipment and an RF transmitter/receiver circuit, wherein said RF front-end stage comprises a plurality of front-end modules, each one including a frequency duplexer with a pass-band/pass-band filter characteristic for simultaneously communicating uplink and downlink frequency sub-bands of a single designated operating band, and wherein said RF front-end stage is
**characterized in that** it further comprises at least one front-end module (210) according to any of claims 1-3.

5. A method for simultaneously communicating uplink and downlink frequency sub-bands of a plurality of dedicated operating bands, wherein at least one of the uplink frequency sub-bands of said plurality of operating bands is not adjacent to the other uplink frequency sub-bands of said plurality of operating bands or at least one of the downlink frequency sub-bands of said plurality of operating bands is not adjacent to the other downlink frequency sub-bands of said plurality of operating bands,
**characterized by**
communicating uplink frequency sub-bands and downlink frequency sub-bands of a plurality of operating bands over a single front-end module which includes a frequency duplexer that comprises a combination of a pass-band filter and a notch filter, wherein
a) said plurality of downlink frequency sub-bands communicated by said multi operating band front-end module (210) are adjacent to each other and at least one of the uplink frequency sub-bands communicated by said multi operating band front-end module (210) is not adjacent to the other uplink frequency sub-bands, and wherein said communicating step comprises applying said notch filter in the transmit path of the frequency duplexer and said pass-band filter in the receive path of said frequency duplexer; or
b) said plurality of uplink frequency sub-bands communicated by said multi operating band front-end module (210) are adjacent to each other and at least one of the downlink frequency sub-bands communicated by said multi operating band front-end module (210) is not adjacent to the other downlink frequency sub-bands, and wherein said communicating step comprises applying said notch filter in the receive path of the frequency duplexer and said pass-band filter in the transmit path of said frequency duplexer.

## Patentansprüche

1. Eingangsmodul (210) für eine Benutzereinrichtung mit Frequenzunterteilungsduplex (FDD), wobei das Modul eine Antenne der Benutzereinrichtung mit einer HF-Sender/Empfänger-Schaltung der Benutzereinrichtung verbindet und eine Frequenzduplexeinheit aufweist, die zwischen der Antenne und sowohl einem Empfangspfad als auch einem Sendepfad zu und von der HF-Sender/Empfänger-Schaltung angeschlossen ist, und einen Leistungsverstärkerabschnitt und einen Rauschfilter in dem Sendepfad aufweist;
**dadurch gekennzeichnet, dass**
die Frequenzduplexeinheit eine Kombination aus einem Durchlassbandfilter und einem Kerbfilter aufweist und ausgebildet ist, mehrere Betriebsbänder, die jeweils ein Aufwärtsverbindungs-Frequenzunterband und ein Abwärtsverbindungs-Frequenzunterband enthalten, zu übermitteln,
wobei
a) mindestens eines der Aufwärtsverbindungs-Frequenzunterbänder der mehreren Betriebsbänder nicht benachbart zu den anderen Aufwärtsverbindungs-Frequenzunterbändern der mehreren Betriebsbändern liegt, in welchem Falle der Durchlassbandfilter zwischen der Antenne und dem Empfangspfad angeschossen ist und der Kerbfilter zwischen der Antenne und dem Sendepfad angeschlossen ist; oder
b) mindestens eines der Abwärtsverbindungs-Frequenzunterbänder der mehreren Betriebsbänder nicht benachbart zu den anderen Abwärtsverbindungs-Frequenzunterbändern der mehreren Betriebsbändern liegt, in welchem Falle der Durchlassbandfilter zwischen der Antenne und dem Sendepfad und der Kerbfilter zwischen der Antenne und dem Empfangspfad angeschlossen ist.

2. Eingangsmodul nach Anspruch 1, wobei die mehreren Abwärtsverbindungs-Frequenzunterbänder zueinander benachbart liegen und mindestens eines der Aufwärtsverbindungs-Frequenzunterbänder nicht benachbart zu den anderen Aufwärtsverbindungs-Frequenzunterbändern liegt, und wobei der Durchlassbandfilter so aufgebaut ist, dass er die mehreren Aufwärtsverbindungs-Frequenzunterbänder und die mehreren Abwärtsverbindungs-Frequenzunterbänder durchlässt, und wobei der Kerbfilter so aufgebaut ist, dass er die mehreren Aufwärtsverbindungs-Frequenzunterbänder durchlässt und die mehreren Abwärtsverbindungs-Frequenzunterbänder blockiert.

3. Eingangsmodul nach Anspruch 1, wobei die mehreren Aufwärtsverbindungs-Frequenzunterbänder benachbart zueinander liegen und mindestens eines der Abwärtsverbindungs-Frequenzunterbänder nicht benachbart zu den anderen Abwärtsverbindungs-Frequenzunterbändern liegt, und wobei der Durchlassbandfilter so aufgebaut ist, dass er die mehreren Aufwärtsverbindungs-Frequenzunterbänder und die mehreren Abwärtsverbindungs-Frequenzunterbänder durchlässt, und wobei der Kerbfilter so aufgebaut ist, dass er die mehreren Abwärtsverbindungs-Frequenzunterbänder durchlässt und die mehreren Aufwärtsverbindungs-Frequenzunterbänder blockiert.

4. HF-Eingangsstufe mit mehreren Betriebsbändern für eine Benutzereinrichtung, die Frequenzunterteilungsduplex (FDD) anwendet zur Übermittelung sowohl von Aufwärtsverbindungsals auch Abwärtsverbindungs-Frequenzunterbändern von mehreren Betriebsbändern, wobei die HF-Eingangsstufe zwischen einer Antenne der Benutzereinrichtung und einer HF-Sender/Empfänger-Schaltung angeschlossen ist, wobei die HF-Eingangsstufe mehrere Eingangsmodule aufweist, wovon jedes eine Frequenzduplexeinheit mit Durchlassband-/Durchlassbandfiltercharakteristik zur gleichzeitigen Übermittelung von Aufwärtsverbindungs- und Abwärtsverbindungs-Frequenzunterbändern eines einzigen zugewiesenen Betriebsbands enthält, und wobei die HF-Eingangsstufe **dadurch gekennzeichnet ist, dass** sie ferner mindestens ein Eingangsmodul (210) nach einem der Ansprüche 1-3 aufweist.

5. Verfahren zur gleichzeitigen Übermittlung von Aufwärtsverbindungs- und Abwärtsverbindungs-Frequenzunterbändern von mehreren zugeordneten Betriebsbändern, wobei mindestens eines der Aufwärtsverbindungs-Frequenzunterbänder der mehreren Betriebsbänder nicht benachbart zu den anderen Aufwärtsverbindungs-Frequenzunterbändern der mehreren Betriebsbänder liegt oder mindestens eines der Abwärtsverbindungs-Frequenzunterbänder der mehreren Betriebsbänder nicht benachbart zu den anderen Abwärtsverbindungs-Frequenzunterbändern der mehreren Betriebsbänder liegt,
**gekennzeichnet durch**
Übermitteln von Aufwärtsverbindungs-Frequenzunterbändern und Abwärtsverbindungs-Frequenzunterbändern von mehreren Betriebsbändern über ein einziges Eingangsmodul, das eine Frequenzduplexeinheit aufweist, die eine Kombination aus einem Durchlassbandfilter und einem Kerbfilter aufweist, wobei
a) die mehreren Abwärtsverbindungs-Frequenzunterbänder, die durch das Eingangsmodul mit mehreren Betriebsbändern (210) übermittelt werden, benachbart zueinander liegen und mindestens eines der Aufwärtsverbindungs-Frequenzunterbänder, die von dem Eingangsmodul mit mehreren Betriebsbändern (210) übermittelt werden, nicht benachbart zu den anderen Aufwärtsverbindungs-Frequenzunterbändern liegt, und wobei der Schritt des Übermittelns umfasst: Anwenden des Kerbfilters in dem Sendepfad der Frequenzduplexeinheit und des Durchlassbandfilters in dem Empfangspfad der Frequenzduplexeinheit; oder
b) die mehreren Aufwärtsverbindungs-Frequenzunterbänder, die von dem Eingangsmodul mit mehreren Betriebsbändern (210) übermittelt werden, benachbart zueinander liegen und mindestens eines der Abwärtsverbindungs-Frequenzunterbänder, die von dem Eingangsmodul mit mehreren Betriebsbändern (210) übermittelt werden, nicht benachbart zu den anderen Abwärtsverbindungs-Frequenzunterbändern liegt, und wobei der Schritt des Übermittelns umfasst: Anwenden des Kerbfilters in dem Empfangspfad der Frequenzduplexeinheit und des Durchlassbandfilters in dem Sendepfad der Frequenzduplexeinheit.

## Revendications

1. Module frontal (210) pour équipement utilisateur duplex à répartition en fréquence (FDD), lequel module relie une antenne de l'équipement utilisateur à un circuit émetteur/récepteur RF de l'équipement utilisateur et comprend un duplexeur fréquentiel relié entre ladite antenne et à la fois une voie réception et une voie émission en provenance et à destination dudit circuit émetteur/récepteur RF, et une partie amplificateur de puissance et un filtre de bruit dans la voie émission ;
**caractérisé en ce que**
ledit duplexeur fréquentiel comprend une combinaison d'un filtre passe-bande et d'un filtre réjecteur de bande et est adapté à communiquer une pluralité de bandes de fonctionnement comprenant chacune une sous-bande de fréquence montante et une sous-bande de fréquence descendante, dans lequel
a) au moins une des sous-bandes de fréquence montantes de ladite pluralité de bandes de fonctionnement n'est pas adjacente aux autres sous-bandes de fréquence montantes de ladite pluralité de bandes de fonctionnement, auquel cas ledit filtre passe-bande est relié entre l'antenne et la voie réception et ledit filtre réjecteur de bande est relié entre l'antenne et la voie émission ; ou
b) au moins une des sous-bandes de fréquence descendantes de ladite pluralité de bandes de fonctionnement n'est pas adjacente aux autres sous-bandes de fréquence descendantes de ladite pluralité de bandes de fonctionnement, auquel cas ledit filtre passe-bande est relié entre l'antenne et la voie émission et ledit filtre réjecteur de bande est relié entre l'antenne et la voie réception.

2. Module frontal selon la revendication 1, dans lequel ladite pluralité de sous-bandes de fréquence descendantes sont adjacentes les unes aux autres et au moins une des sous-bandes de fréquence montantes n'est pas adjacente aux autres sous-bandes de fréquence montantes, et dans lequel ledit filtre passe-bande est conçu pour laisser passer ladite pluralité de sous-bandes de fréquence montantes et ladite pluralité de sous-bandes de fréquence descendantes, et ledit filtre réjecteur de bande est conçu pour laisser passer ladite pluralité de sous-bandes de fréquence montantes et pour bloquer ladite pluralité de sous-bandes de fréquence descendantes.

3. Module frontal selon la revendication 1, dans lequel ladite pluralité de sous-bandes de fréquence montantes sont adjacentes les unes aux autres et au moins une des sous-bandes de fréquence descendantes n'est pas adjacente aux autres sous-bandes de fréquence descendantes, et dans lequel ledit filtre passe-bande est conçu pour laisser passer ladite pluralité de sous-bandes de fréquence montantes et ladite pluralité de sous-bandes de fréquence descendantes, et ledit filtre réjecteur de bande est conçu pour laisser passer ladite pluralité de sous-bandes de fréquence descendantes et pour bloquer ladite pluralité de sous-bandes de fréquence montantes.

4. Etage frontal RF à bandes de fonctionnement multiples pour équipement utilisateur fonctionnant en duplex à répartition en fréquence (FDD) pour la communication de sous-bandes de fréquence à la fois montantes et descendantes d'une pluralité de bandes de fonctionnement, et relié entre une antenne de l'équipement utilisateur et un circuit émetteur/récepteur RF, lequel étage frontal RF comprend une pluralité de modules frontaux, chacun comportant un duplexeur fréquentiel avec une caractéristique de filtrage passe-bande/passe-bande pour la communication simultanée de sous-bandes de fréquence montantes et descendantes d'une bande de fonctionnement simple désignée, et lequel étage frontal RF est
**caractérisé en ce qu'**il comprend en outre au moins un module frontal (210) selon l'une quelconque des revendications 1 à 3.

5. Procédé de communication simultanée de sous-bandes de fréquence montantes et descendantes d'une pluralité de bandes de fonctionnement dédiées, au moins une des sous-bandes de fréquence montantes de ladite pluralité de bandes de fonctionnement n'étant pas adjacente aux autres sous-bandes de fréquence montantes de ladite pluralité de bandes de fonctionnement et au moins une des sous-bandes de fréquence descendantes de ladite pluralité de bandes de fonctionnement n'étant pas adjacente aux autres sous-bandes de fréquence descendantes de ladite pluralité de bandes de fonctionnement,
**caractérisé par** l'étape suivante
communication de sous-bandes de fréquence montantes et de sous-bandes de fréquence descendantes d'une pluralité de bandes de fonctionnement par le biais d'un module frontal simple comportant un duplexeur fréquentiel comprenant une combinaison d'un filtre passe-bande et d'un filtre réjecteur de bande, dans lequel
a) ladite pluralité de sous-bandes de fréquence descendantes communiquées par ledit module frontal à bandes de fonctionnement multiples (210) sont adjacentes les unes aux autres et au moins une des sous-bandes de fréquence montantes communiquées par ledit module frontal à bandes de fonctionnement multiples (210) n'est pas adjacente aux autres sous-bandes de fréquence montantes, et ladite étape de communication comprend l'étape d'application dudit filtre réjecteur de bande dans la voie émission du duplexeur fréquentiel et dudit filtre passe-bande dans la voie réception dudit duplexeur fréquentiel ; ou
b) ladite pluralité de sous-bandes de fréquence montantes communiquées par ledit module frontal à bandes de fonctionnement multiples (210) sont adjacentes les unes aux autres et au moins une des sous-bandes de fréquence descendantes communiquées par ledit module frontal à bandes de fonctionnement multiples (210) n'est pas adjacente aux autres sous-bandes de fréquence descendantes, et ladite étape de communication comprend l'étape d'application dudit filtre réjecteur de bande dans la voie réception du duplexeur fréquentiel et dudit filtre passe-bande dans la voie émission dudit duplexeur fréquentiel.
